# EUROPÄISCHE PATENTSCHRIFT

(11) **EP 3 225 833 B1**
(45) Veröffentlichungstag und Bekanntmachung des Hinweises auf die Patenterteilung: **06.03.2019**
(21) Anmeldenummer: 17020109.9
(22) Anmeldetag: 21.03.2017
(51) Int. Cl.: F03B 17/06, F03D 3/06

(54) **ROTATIONSVORRICHTUNG, GEHÄUSE UND ZUGEHÖRIGES KRAFTWERK**
ROTARY DEVICE, HOUSING AND CORRESPONDING POWER PLANT
DISPOSITIF ROTATIF, BOÎTIER ET CENTRALE CORRESPONDANTE

(30) Priorität: 30.03.2016 DE 102016003918
(43) Veröffentlichungstag der Anmeldung: 04.10.2017
(73) Patentinhaber: JSM GbR, 55469 Simmern (DE)
(72) Erfinder: SCHIEL, Hans-Josef, 55841 Lindenschied (DE)
(74) Vertreter: Seitz, Ralf Hans Frank

(56) Entgegenhaltungen:
- EP-A1- 1 933 028
- WO-A1-01/34975
- WO-A1-2010/104419
- DE-A1- 2 509 169
- DE-A1-102010 010 208

## Beschreibung

Die vorliegende Erfindung betrifft eine Kombination mit einer Rotationsvorrichtung zum Erzeugen elektrischer Energie aus Wasserkraft gemäß dem Oberbegriff von Anspruch 1 und ein zugehöriges Kraftwerk gemäß dem Oberbegriff von Anspruch 6.
WO 2010/104419 A1 beschreibt einen bekannten Windenergierotor mit Flügeln, die an Achsen angeordnet sind, die parallel zu der Drehachse des Rotors vorgesehen sind. Die Flügel können mit zugehörigen Antrieben um ihre jeweiligen Achsen gedreht werden. Die Flügel können doppelstöckig übereinander angeordnet sein.
WO 01/34975 A1 beschreibt eine Wind oder Wasser-Energieanlage mit einem rotierenden Zylinder mit verstellbaren Scheiben, die um die Zylinderachse drehen und an denen mehrere aerodynamische Flügel drehbar gelagert sind, wobei der Wind über Fluidfangflügel die Flügel der Zylinder anströmt.

In einem Kraftwerk kann durch Verwendung einer Rotationsvorrichtung oder einer Turbine mit einem angekoppelten elektrischen Generator elektrische Energie aus der Energie des Wassers eines Gewässers oder Flusses gewonnen werden. In der EP 2191129 B1 und der EP 1979611 B1 sind Rotationsvorrichtungen mit einem angekoppelten Generator zum Erzeugen elektrischen Stroms in einem Kraftwerk beschrieben. Die Offenlegungsschrift WO 2013/123923 A1 beschreibt ein Kraftwerk zum Erzeugen elektrischer Energie mit mindestens einer Stauvorrichtung zum Aufstauen oder Speichern von Wasser aus einem natürlichen oder künstlichen Gewässer oder Fluss und mit einem Stromerzeuger oder einer solchen Rotationsvorrichtung oder einer Turbine mit einem angekoppelten elektrischen Generator zum Erzeugen von elektrischem Strom, wobei die Rotationsvorrichtung von dem Wasser der Stauvorrichtung angetrieben wird.

Aufgabe der Erfindung ist es eine Kombination mit einer Rotationsvorrichtung anzugeben, die eine erhöhte Energieausbeute eines Staukraftwerks ermöglicht.

Diese Aufgabe wird durch die Kombination mit Rotationsvorrichtung gemäß Anspruch 1 gelöst. Demnach weist die Kombination der Erfindung zur Erzeugung von elektrischer Energie aus der Strömungsbewegung eines Fluids, insbesondere von Wasser, eine Rotationsvorrichtung mit einer Hauptdreheinrichtung, die mit einer zentralen Drehachse der Rotationsvorrichtung fest verbunden ist, und mit mehreren Drehflächen, Flügel oder Schaufeln auf, die von dem strömenden Wasser angetrieben werden und drehbar mit Abstand zu der zentralen Drehachse derart an der Hauptdreheinrichtung angebracht
sind, dass die Hauptdreheinrichtung durch die Drehflächen eine Drehbewegung zusammen mit der zentralen Drehachse ausführen kann. Die Rotationsvorrichtung der Erfindung hat weiterhin mindestens eine Drehflächengruppe mit mehreren Drehflächen, die entlang einer gemeinsamen Drehflächenachse angeordnet und mit dieser verbunden sind, und mehrere Kammern, welche entlang und senkrecht zu der zentralen Drehachse vorgesehen und radial bezüglich der zentralen Drehachse offen sind, wobei eine Drehfläche einer Drehflächengruppe in genau einer Kammer angeordnet ist.

Die Kombination der Erfindung hat auch ein Gehäuse für die Rotationsvorrichtung, wobei das Gehäuse eine Einströmöffnung zum Einströmen von Fluid oder Wasser und eine Ausströmöffnung zum Ausströmen des Fluids oder Wassers aus dem Gehäuse hat, wobei die Einströmöffnung der Ausströmöffnung gegenüberliegt. Eine umschließende Gehäusewand des Gehäuses erstreckt sich zwischen der Einströmöffnung und der Ausströmöffnung, um zwischen der Einströmöffnung und der Ausströmöffnung einen Gehäuseinnenraum des Gehäuses zu begrenzen, wobei der Gehäuseinnenraum in mehrere Gehäuse-Fächer unterteilt ist, die durch Gehäuse-Trennwänden voneinander getrennt sind oder Wände begrenzt sind, welche sich parallel zueinander erstrecken, und von der Einströmöffnung bis zur Ausströmöffnung fluiddurchgängig sind. Die Gehäusewand des Gehäuses der Erfindung und deckungsgleiche Durchgangsöffnungen in den Gehäuse-Trennwänden zwischen den Fächern stellen eine Aufnahmekammer zum Aufnehmen der Rotationsvorrichtung in dem Gehäuseinnenraum bereit.

Das Gehäuse der Erfindung ermöglicht die Ankopplung der Rotationsvorrichtung an eine Stauvorrichtung und gleichzeitig auch die Zwangsführung des Fluids oder Wassers zu den Kammern der Rotationsvorrichtung.

Die Rotationsvorrichtung der vorliegenden Erfindung ermöglicht somit, dass eine oder mehrere der Kammern oder alle Kammern mit Wasser voll angeströmt werden können, wodurch der Wirkungsgrad bzw. die Ausbeute elektrischer Energie durch diese Zwangsführung des Wassers vorteilhafterweise erheblich erhöht werden kann. Insbesondere kann mit der Mehrkammer-Rotationsvorrichtung der Erfindung auch bei abnehmender Wassermenge ein zwangsgeführter Durchfluss erreicht werden, da mehrere Kammern vorhanden sind.

Bevorzugt sind mehrere Drehflächen-Gruppen mit entsprechend vielen Stellrädern vorgesehen, wobei jeweils ein Stellrad einer Drehflächengruppe zugeordnet ist, wobei das jeweilige Stellrad mit der zugeordneten Drehflächenachse einer Drehflächengruppe konzentrisch zum Einstellen einer gemeinsamen Winkelposition der Drehflächen pro Drehflächengruppe gegenüber einer Fließrichtung des Fluids oder Wassers gekoppelt ist. Durch Betätigen des Stellrads können dann die Drehflächen einer Drehflächengruppe auf die gleiche gemeinsame Winkelposition eingestellt werden.

Die Stellräder können aber auch mit einem zentralen Stellglied gekoppelt sein, das mit allen Stellrädern synchron gekoppelt ist. Wird dann das zentrale Stellglied betätigt, werden auch die Stellräder synchron zueinander verstellt. Diese Kopplung ermöglicht auch, dass bei Betätigung eines der Stellräder, die Verstellung des betätigten Stellrads auch auf die anderen Stellräder übertragen wird, insbesondere synchron. Das zentrale Stellglied könnte auch starr mit einem Gehäuse der Rotationsvorrichtung gekoppelt oder verbunden sein. Die Stellräder können über Pendelhülsen frei drehbar und einstellbar sein.

Bevorzugt sind die Stellräder als Zahnräder ausgelegt, um eine genaue Einstellung der Winkelposition der Drehflächen pro Stellrad zu ermöglichen. Ein zentrale Stellglied, mit dem die Stellräder gekoppelt sein können, weist bevorzugt eine Pendelhülse oder Hohlwelle auf, die sich frei um die zentrale Drehachse herum drehen kann und konzentrisch zu der zentralen Drehachse ist, um eine Einstellung der Winkelposition unabhängig von der Drehung der zentralen Drehachse durchführen zu können. Das zentrale Stellglied kann auch ein Zahnrad oder ein Pendelrad aufweisen.

Bevorzugt sind die Stellräder der Drehflächengruppen nebeneinander in einer gemeinsamen Ebene angeordnet die senkrecht zu der zentralen Drehachse ist, wodurch eine räumlich kompakte Anordnung erreicht wird. Die Drehflächenachsen bzw. deren Mittenlinien können einen gemeinsamen Kreis schneiden, der sich konzentrisch zu einer Mittenlinie der zentralen Drehachse erstreckt.

Die Kammern sind bevorzugt jeweils durch parallele Trennwände oder Wände begrenzt, welche entlang und senkrecht zu der zentralen Drehachse der Dreheinrichtung angeordnet und radial bezüglich der Drehachse offen sind, wobei genau eine Drehfläche einer Drehflächengruppe in genau einer Kammer untergebracht ist, um einen wirksamen kompakten Aufbau zu erhalten. Aus den gleichen Gründen können auch mehrere Drehflächengruppen mit jeweils mehreren Drehflächen vorgesehen sein, wobei die Drehflächen, die gemeinsam in einer Ebene senkrecht zur zentralen Drehachse sind, in einer der Kammern angeordnet sind.

Die Trennwände können fest mit der zentralen Drehachse gekoppelt sein und Durchgangsöffnungen für die Drehflächenachsen entsprechend der Anzahl der Drehflächengruppen haben, wodurch die gleiche Winkeleinstellung der Drehflächen pro Drehflächengruppe erreicht werden kann.

Die Gehäuse-Fächer haben bevorzugt jeweils das gleiche Volumen. Die Gehäuse-Trennwände zwischen den Fächern können parallel und deckungsgleich zueinander sind. Die Abstände zwischen jeweils zwei benachbarten Gehäuse-Trennwänden bzw. zwischen einer Gehäuse-Trennwand und einer Begrenzungswand sind bevorzugt gleich.
Bevorzugt hat jedes der Gehäuse-Fächer eine Einström-Fachöffnung und eine dazu gegenüberliegende und deckungsgleiche Ausström-Fachöffnung für das Fluid, wobei die Einström-Fachöffnungen bündig zu der Einströmöffnung des Fluids und zusammen mit den dazwischen angeordneten Gehäuse-Trennwänden die Einströmöffnung des Gehäuses unterteilen und wobei die Ausström-Fachöffnungen bündig zu der Ausströmöffnung sind und zusammen mit den dazwischen angeordneten Gehäuse-Trennwänden und Begrenzungswänden die Ausströmöffnung unterteilen. Bevorzugt hat das Gehäuse mindestens einen Flanschrahmen, der die Einströmöffnung oder die Ausströmöffnung des Gehäuses begrenzt und auch einen Durchlass in einer Stauwand abdichten kann. Zudem ist der Flanschrahmen zum Befestigen des Gehäuses an der Stauvorrichtung vorgesehen.

Die Erfindung betrifft auch ein Kraftwerk nach Anspruch 6 zum Erzeugen elektrischer Energie mit mindestens einer Stauvorrichtung zum Aufstauen oder Speichern von Wasser aus einem natürlichen oder künstlichen Gewässer oder Fluss, wobei die Stauvorrichtung mindestens einen Durchlass bzw. Auslass, in dem die Strömungsgeschwindigkeit des Wassers erhöht ist, und eine Kombination mit einer Mehrkammer-Rotationsvorrichtung nach Anspruch 1 hat, wobei die Rotationsvorrichtung der Kombination mit einem elektrischen Generator zum Erzeugen von elektrischem Strom gekoppelt ist, in oder an dem Durchlass der Stauvorrichtung angeordnet ist und durch das durch den Durchlass fließende Wasser angetrieben wird.

Aufgrund der Rotationsvorrichtung mit mehreren Kammern kann die elektrische Energieausbeute des Kraftwerks erheblich erhöht werden, nämlich maximal um den Faktor 2 im Vergleich zu den bekannten Einkammer-Rotationsvorrichtungen.

Die Rotationsvorrichtung ist in einem Gehäuse untergebracht. Die Anzahl der Kammern der Rotationsvorrichtung ist bevorzugt gleich der Anzahl der Fächer des Gehäuses, um eine Zwangsführung des Wassers zu den Kammern der Rotationsvorrichtung zu ermöglichen.

Jede Kammer der Rotationsvorrichtung ist bevorzugt genau einem Fach des Gehäuses zugeordnet, wobei das Wasser oder Fluid in eine Einström-Fachöffnung des jeweiligen Fachs einströmt, die zugeordnete Kammer durchströmt und die in der Kammer angeordneten Drehflächen antreibt, und wieder von der Kammer in das jeweilige Fach des Gehäuses fließt und schließlich aus der Ausström-Fachöffnung des Fachs aus dem Gehäuse ausströmt.

Bevorzugt fließt das Wasser oder Fluid gleichzeitig nur durch eine Kammer, eine Teilanzahl der Kammern oder durch alle Kammern der Rotationsvorrichtung, wenn eine Zwangsführung des Wassers erfolgt.

Bevorzugt ist ein Verschluss vorgesehen, der die Einströmöffnung des Gehäuses ganz oder teilweise verschließen kann. Der Verschluss kann eine Einström-Fachöffnung des Gehäuses, mehrere Einström-Fachöffnungen oder alle Einström-Fachöffnungen des Gehäuses vollständig verschließen. Als Verschluss kann z.B. ein Schieber verwendet werden. Bei abnehmender Wassermenge kann somit der Schieber bzw. der Verschluss derart betätigt werden, dass ein konstanter Wasserstand im Stausystem gewährleistet wird und/oder möglichst viele Kammern der Mehrkammer-Rotationsvorrichtung mit einem vollen Volumenstrom durchflossen werden.

Bevorzugt ist der Schieber oder Verschluss' in Abhängigkeit von dem Wasserpegel in der Stauvorrichtung einstellbar. Der Schieber des Verschlusses kann weiterhin mit einem elektromotorischen Antrieb zum Einstellen einer Schieberposition des Schiebers in der Vertikalen gekoppelt sein. Eine Pegelmesseinrichtung zum Ermitteln des Wasserpegels in der Stauvorrichtung kann vorgesehen sein. Die Pegelmesseinrichtung kann mit einer Steuereinrichtung gekoppelt sein, die wiederum mit dem elektromotorischen Antrieb gekoppelt ist und in Abhängigkeit von dem Wasserpegel über den elektromotorischen Antrieb den Schieber derart betätigt, dass immer mindestens eine Einström-Fachöffnung, mehrere oder alle Einström-Fachöffnungen über ihren jeweils gesamten Querschnitt vollständig geöffnet oder verschlossen ist oder sind. Mittels dieser Einrichtungen kann die Höhenverstellung des Schiebers und somit auch die Zwangsführung von Wasser zu den Kammern der Rotationsvorrichtung automatisiert werden.
Vorteilhafte Weiterbildungen der Erfindung sind den Unteransprüchen zu entnehmen. Weitere Vorteile, Anwendungsmöglichkeiten und vorteilhafte Weiterbildungen der Erfindung sind der nachfolgenden Beschreibung von bevorzugten und beispielhaften Ausführungsformen der Erfindung in Verbindung mit den Zeichnungen zu entnehmen. Es zeigen:
- Fig. 1: eine perspektivische Ansicht einer Rotationsvorrichtung einer bevorzugten Ausführungsform der Kombination der Erfindung;
- Fig. 2: eine Seitenansicht der Rotationsvorrichtung von Fig. 1 in Richtung des Pfeiles II. in Fig. 4 gesehen;
- Fig. 3: eine weitere Seitenansicht der Rotationsvorrichtung von Fig. 1 in Richtung des Pfeiles III. in Fig. 4 gesehen;
- Fig. 4: eine Draufsicht der Rotationsvorrichtung der Erfindung von Fig. 1 in Richtung des Pfeiles IV in Fig. 2 gesehen;
- Fig. 5: eine perspektivische Ansicht eines Gehäuses der bevorzugten Ausführungsform der Kombination der Erfindung mit der darin eingebauten Rotationsvorrichtung gemäß Fig. 1, wobei eine Ausströmöffnung des Gehäuses dargestellt ist;
- Fig. 6: eine weitere perspektivische Ansicht des Gehäuses von Fig. 5, wobei eine Einströmöffnung des Gehäuses gezeigt ist;
- Fig. 7: eine schematische, seitliche Ansicht des Gehäuses von Fig. 5 und Fig. 6 in Richtung des Pfeiles VII. in Fig. 9 gesehen;
- Fig. 8: eine schematische, seitliche Ansicht des Gehäuses von Fig. 5 und Fig. 6 in Richtung des Pfeiles VIII. in Fig. 9 gesehen;
- Fig. 9: eine schematische Draufsicht des Gehäuses von Fig. 5 und Fig. 6 in Richtung des Pfeiles IX. in Fig. 7 gesehen; und
- Fig. 10: eine schematische Zusammenstellungszeichnung eines Kraftwerks der Erfindung gemäß einer bevorzugten Ausführungsform mit der Kombination der Erfindung mit der Rotationsvorrichtung gemäß Fig. 1 und dem Gehäuse gemäß Fig. 5 und Fig. 6, in das die Rotationsvorrichtung eingebaut ist.

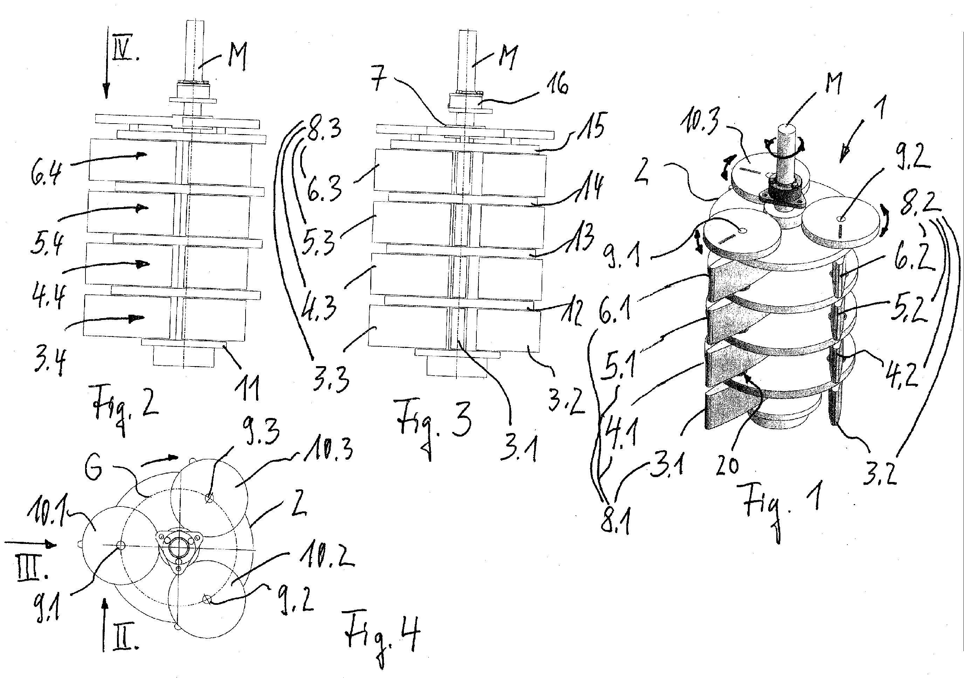

Fig. 1 zeigt eine perspektivische Ansicht einer Rotationsvorrichtung 1 gemäß einer bevorzugten Ausführungsform der Kombination der Erfindung, während Fig. 2 und Fig. 3 Seitenansichten der Rotationsvorrichtung 1 und Fig. 4 eine Draufsicht auf die Rotationsvorrichtung 1 zeigen.
Die Rotationsvorrichtung 1 wird bevorzugt in einem Fluid, insbesondere Wasser, verwendet, um elektrische Energie aus der Strömungsbewegung des Fluids zu gewinnen. Die Rotationsvorrichtung 1 weist eine Hauptdreheinrichtung 2 auf, die mit einer zentralen Drehachse M der Rotationsvorrichtung 1 fest verbunden ist, um eine durch das strömende Wasser erzeugte Drehbewegung der Hauptdreheinrichtung 2 auf die Hauptdrehachse M zu übertragen. Zudem hat die Rotationsvorrichtung 1 mehrere Drehflächen 3.1, 4.1, 5.1, 6.1, 3.2, 4.2, 5.2, 6.2, 3.3, 4.3, 5.3 und 6.3, die von Wasser angetrieben werden und drehbar mit Abstand zu der zentralen Drehachse M derart an der Hauptdreheinrichtung 2 angebracht sind, dass die Hauptdreheinrichtung 2 durch die Drehflächen eine Drehbewegung zusammen mit der zentralen Drehachse M um deren fiktiver Symmetriemittenlinie zur Stromerzeugung ausführen kann.
Die Rotationsvorrichtung hat ein zentrales Stellglied 7, das frei um die zentrale Drehachse M herum drehbar und verstellbar ist. Das Stellglied 7 kann eine Pendelhülse oder Hohlwelle aufweisen, die sich frei um die zentrale Drehachse M herum drehen kann und konzentrisch zu der zentralen Drehachse M ist. Das zentrale Stellglied 7 ist bevorzugt ein Zahnrad oder ein Pendelrad.

Zudem hat die Rotationsvorrichtung 1 drei Drehflächengruppen 8.1, 8.2, 8.3 mit jeweils gleich vielen Drehflächen pro Drehflächengruppe 8.1, 8.2, 8.3, die entlang einer gemeinsamen Drehflächenachse 9.1, 9.2, 9.3 angeordnet und mit dieser verbunden sind. So hat die Drehflächengruppe 8.1 die Drehflächen 3.1, 4.1, 5.1 und 6.1, die mit der Drehflächenachse 9.1 verschwenkbar verbunden sind. Die Drehflächengruppe 8.2 umfasst die Drehflächen 3.2, 4.2, 5.2 und 6.2, die mit der Drehflächenachse 9.2 verschwenkbar verbunden sind. Zudem hat die Drehflächengruppe 8.3 die Drehflächen 3.3, 4.3, 5.3 und 6.3, die mit der Drehflächenachse 9.3 verschwenkbar verbunden sind.

Die Rotationsvorrichtung 1 hat weiterhin, ein Stellrad 10.1, 10.2, 10.3 pro Drehflächengruppe 8.1, 8.2, 8.3, wobei die Stellräder 10.1, 10.2, 10.3 jeweils mit einer der Drehflächenachsen 9.1, 9.2, 9.3 gemäß einer Drehflächengruppe 8.1, 8.2, 8.3 konzentrisch verbunden sind und mit dem zentralen Stellglied 7 zum Einstellen einer Winkelposition der Drehflächen einer Drehflächengruppe 8.1, 8.2, 8.3 gegenüber einer Fließrichtung F des Fluids oder Wassers 48 gekoppelt sind. Jeweils ein Stellrad 10.1, 10.2, 10.3 ist somit einer Drehflächengruppe 8.1, 8.2, 8.3 zugeordnet und alle Stellräder 10.1, 10.2, 10.3 sind mit dem zentralen Stellglied 7 gekoppelt. Die Stellräder 10.1, 10.2, 10.3 sind bevorzugt als Zahnräder ausgelegt und sind nebeneinander in einer gemeinsamen Ebene angeordnet, die senkrecht zu der zentralen Drehachse M ist. Weiterhin sind die die Drehflächenachsen (derart angeordnet, dass ihre Mittenachsen einen gemeinsamen Kreis G schneiden, der sich konzentrisch zu der zentralen Drehachse M erstreckt.

Die Rotationsvorrichtung hat vier Kammern 3.4, 4.4, 5.4, 6.4, die durch parallele Trennwände 12, 13, 14 bzw. Abschlusswände 11 und 15 begrenzt sind, welche entlang und senkrecht zu der zentralen Drehachse M angeordnet und radial bezüglich der Drehachse offen sind, wobei genau eine Drehfläche 3.3 pro Drehflächengruppe 8.3 in genau einer Kammer 3.4 angeordnet ist. Die drei Drehflächengruppen 8.1, 8.2, 8.3 haben jeweils vier n Drehflächen 3.1, 4.1, 5.1, 6.1; 3.2, 4.2, 5.2, 6.2, 3.3, 4.3, 5.3, 6.3, wobei die Drehflächen 3.1, 3.2, 3.3; 4.1, 4.2, 4.3; 5.1, 5.2, 5.3 bzw. 6.1, 6.2, 6.3, die jeweils gemeinsam in einer Ebene senkrecht zur zentralen Drehachse M sind, in einer der Kammern 3.4, 4.4, 5.4, 6.4 angeordnet sind.

Die kreisscheibenförmigen Trennwände 12, 13, 14 und auch die Abschlusswand 15 sind fest mit der zentralen Drehachse M gekoppelt und haben jeweils drei Durchgangsöffnungen 39 für die Drehflächenachsen 9.1, 9.2, 9.3 entsprechend der Anzahl der Drehflächengruppen.

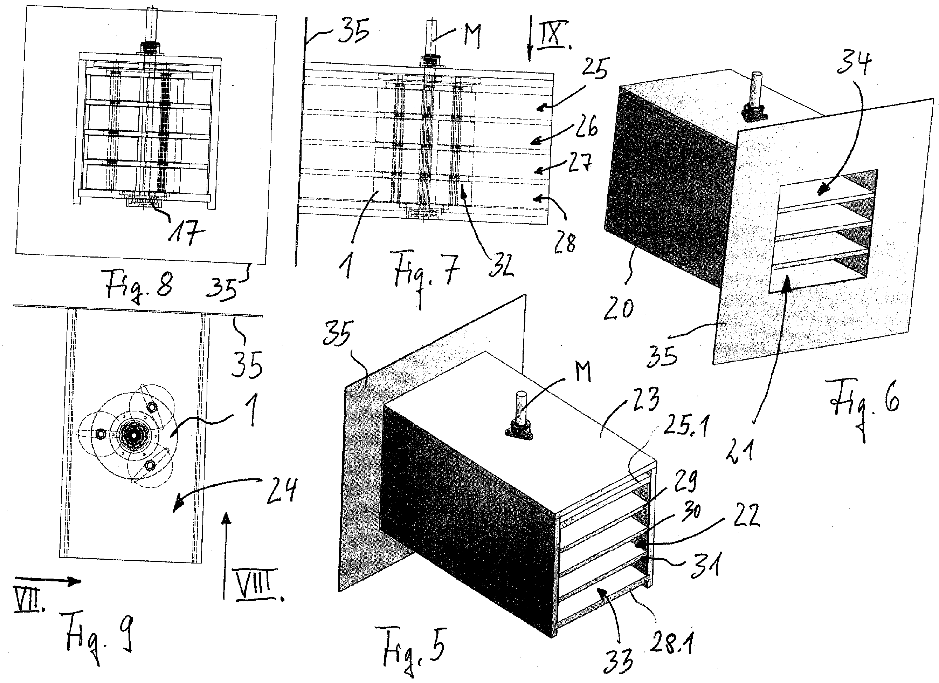

Fig. 5 und Fig. 6 zeigen perspektivische Ansichten eines Gehäuses 20 gemäß einer bevorzugten Ausführungsform der Kombination der Erfindung mit einer darin eingebauten Rotationsvorrichtung 1 gemäß Fig. 1. Zudem zeigen Fig. 7 und Fig. 8 seitliche Ansichten des Gehäuses 20 und Fig. 9 zeigt eine schematische Draufsicht des Gehäuses 20.

Das quadrige Gehäuse 20 weist eine Einströmöffnung 21 zum Einströmen von Fluid oder Wasser und eine Ausströmöffnung 22 zum Ausströmen des Fluids oder Wassers aus dem Gehäuse 20 heraus auf, wobei die Einströmöffnung 21 der Ausströmöffnung 22 gegenüberliegt. Eine umschließende Gehäusewand 23 ist vorgesehen, die sich zwischen der Einströmöffnung 21 und der Ausströmöffnung 22 erstreckt, um zwischen der Einströmöffnung 21 und der Ausströmöffnung 22 einen Gehäuseinnenraum 24 des Gehäuses 20 zu begrenzen. Der Gehäuseinnenraum 24 ist in beispielsweise vier Gehäuse-Fächer 25, 26, 27, 28 unterteilt, die durch drei Gehäuse-Trennwände 29, 30, 31 voneinander getrennt sind, welche sich parallel zueinander, deckungsgleich erstrecken und von der Einströmöffnung 21 bis zur Ausströmöffnung 22 fluiddurchgängig sind. Das oberste Gehäuse-Fach 25 ist oben durch eine obere Wand 25.1 mit einer Öffnung für die Hauptdrehachse begrenzt, während das unterste Gehäuse-Fach 28 durch eine untere Wand 28.1 nach unten begrenzt ist. Die obere und untere Wand 25.1 und 28.1 sind deckungsgleich und parallel zu den Gehäuse-Trennwänden 29, 30, 31.

Deckungsgleiche, mittig angeordnete Durchgangsöffnungen in den Gehäuse-Trennwänden 29, 30, 31 zwischen den Gehäuse-Fächern 25, 26, 27 und 28 stellen zusammen mit den Gehäuse-Fächern 25, 26, 27, 28 eine durchgehende Aufnahmekammer 32 zum Aufnehmen der Rotationsvorrichtung 1 in dem Gehäuseinnenraum 24 bereit.

Die Gehäuse-Fächer 25, 26, 27, 28 haben jeweils das gleich Volumen. Abstände zwischen jeweils zwei benachbarten Gehäuse-Trennwänden 29, 30, 31 sind gleich. Jedes der Gehäuse-Fächer 25, 26, 27, 28 hat eine Einström-Fachöffnung 34 und eine dazu gegenüberliegende und deckungsgleiche Ausström-Fachöffnung 33 für das Fluid oder Wasser, wobei die Einström-Fachöffnungen 34 bündig zu der Einströmöffnung 21 des Gehäuses 20 und zusammen mit den dazwischen angeordneten Gehäuse-Trennwänden diese Einströmöffnung 21 unterteilen und wobei die Ausström-Fachöffnungen 33 bündig zu der Ausströmöffnung 22 des Gehäuses 20 sind und zusammen mit den dazwischen angeordneten Gehäuse-Trennwänden diese Ausströmöffnung 22 unterteilen.

Das Gehäuse 20 weist mindestens eine Flanschrahmen 35 auf, der die Einströmöffnung 21 oder die Ausströmöffnung 22 begrenzt. Die zentrale Drehachse M ist durch ein oberes Lager 16 und ein unteres Lager 17 am Gehäuse 20 drehbar gelagert.

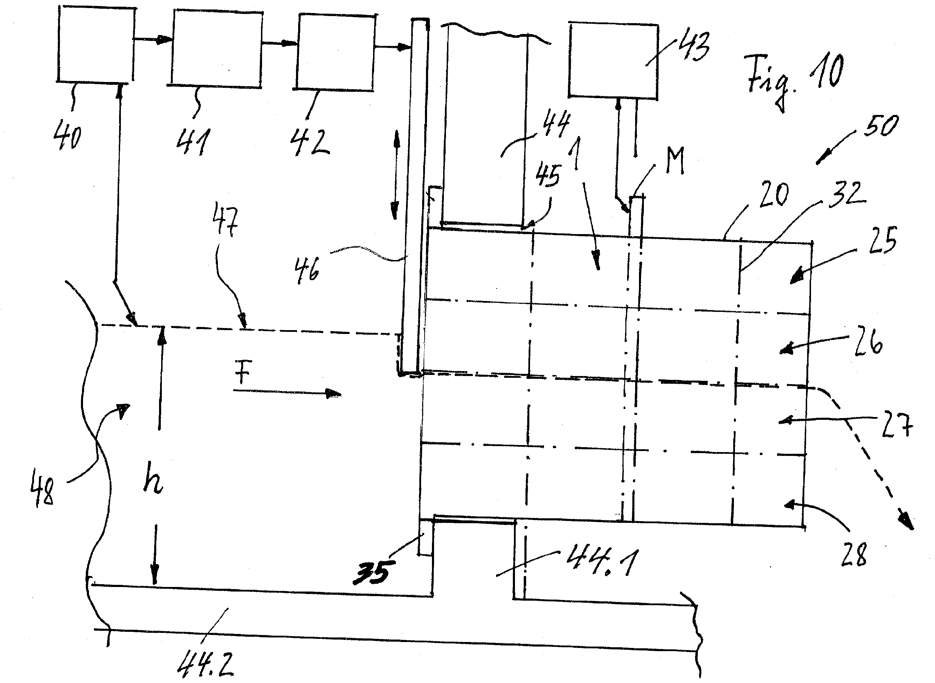

Fig. 10 zeigt eine schematische Zusammenstellungszeichnung eines Kraftwerks 50 der Erfindung gemäß einer bevorzugten Ausführungsform mit einer Rotationsvorrichtung 1 gemäß Fig. 1 und einem Gehäuse 20 gemäß Fig. 5 und Fig. 6. Das Kraftwerk 50 zum Erzeugen elektrischer Energie hat mindestens eine Stauvorrichtung 44 zum Aufstauen oder Speichern von Wasser aus einem natürlichen oder künstlichen Gewässer oder Fluss. Die Stauvorrichtung 44 weist mindestens einen Durchlass 45 oder Auslass auf, in dem die Strömungsgeschwindigkeit des Wassers erhöht ist. Die Rotationsvorrichtung 1 ist mit einem elektrischen Generator 43 zum Erzeugen von elektrischer Energie gekoppelt, ist teilweise in dem Durchlass 45 der Stauvorrichtung 45 angeordnet und wird durch das durch den Durchlass 45 fließende Wasser angetrieben. Genauer ist die Rotationsvorrichtung 1 in dem Gehäuse 20 untergebracht.

Die vier Kammern 3.4, 4.4, 5.4, 6.4 der Rotationsvorrichtung 1 sind den vier Gehäuse-Fächern 25, 26, 27, 28 des Gehäuses 20 zugeordnet. Das Wasser oder Fluid strömt in die Einström-Fachöffnung 34 des jeweiligen Gehäuse-Fachs 25, 26, 27, 28 ein, durchströmt die jeweils zugeordnete Kammer 3.4, 4.4, 5.4, 6.4 durchströmt, treibt die in der jeweiligen Kammer 3.4, 4.4, 5.4, 6.4 angeordneten Drehflächen 3.1, 4.1, 5.1, 6.1, 3.2, 4.2, 5.2, 6.2, 3.3, 4.3, 5.3, 6.3 oder Flügel bzw. Schaufeln an, fließt dann wieder von der jeweiligen Kammer 3.4, 4.4, 5.4, 6.4 in das jeweilige Gehäuse-Fach 25, 26, 27, 28 des Gehäuses 20 fließt und strömt dann schließlich aus der Ausström-Fachöffnung 33 des jeweiligen Gehäuse-Fachs 25, 26, 27, 28 aus dem Gehäuse 20 aus. Die Gehäuse-Fächer 25, 26, 27, 28 und die zugeordneten Kammern 3.4, 4.4, 5.4, 6.4 haben jeweils bündige Querschnitte quer zur Strömungsrichtung des Fluids gesehen und gehen stufenlos ineinander über.

Das Kraftwerk 50 hat einen höhenverstellbaren, plattenförmigen Schieber 46, der als Verschluss für einen Durchlass 45 dient und der die Einströmöffnung 34 des Gehäuses 20 ganz oder teilweise derart verschließen kann, dass das Wasser gleichzeitig nur durch eine der Kammern 3.4, 4.4, 5.4, 6.4, eine Teilanzahl der Kammern oder durch alle Kammern der Rotationsvorrichtung 1 fließt. Der Schieber 46 kann die Einströmöffnung 34 auch vollständig derart verschließen, dass kein Wasser durch die Kammern der Rotationsvorrichtung 1 fließt und somit keine elektrische Energie durch den elektrischen Generator 43 erzeugt wird. Anders ausgedrückt kann der Schieber 46 eine Einström-Fachöffnung 33 des Gehäuses 20, mehrere Einström-Fachöffnungen 33 gleichzeitig oder alle Einström-Fachöffnungen 33 des Gehäuses 30 gleichzeitig vollständig verschließen oder freigeben.

Der Schieber 46 bzw. der Verschluss ist in Abhängigkeit von einem Wasserpegel h in der Stauvorrichtung 44 einstellbar. Genauer ist bevorzugt ein elektromotorischer Antrieb 42, der mit dem Schieber 46 gekoppelt ist, zum Einstellen einer Schieberposition des Schiebers 46 in der Vertikalen gekoppelt. Zudem ist eine Pegelmesseinrichtung 40 zum Ermitteln des Wasserpegels h in der Stauvorrichtung 44 vorgesehen. Die Pegelmesseinrichtung 40 kann zum Beispiel als ein Schwimmer mit einem Stellgestänge für ein elektrisches Potentiometer aufgebaut sein. Das Kraftwerk 50 hat weiterhin einer Steuereinrichtung 41, die eingangsseitig mit der Pegelmesseinrichtung 40 und ausgangsseitig mit dem elektromotorischen Antrieb 42 gekoppelt ist. Die Steuereinrichtung 41 kann als softwaregesteuerter Mikroprozessor-Rechner aufgebaut sein. In Abhängigkeit von dem Wasserpegel h, der von der Pegelmesseinrichtung 40 ermittelt wird, betätigt die Steuereinrichtung 41 über den elektromotorischen Antrieb 42 den Schieber 46 derart, dass immer möglichst eine Einström-Fachöffnung 33, mehrere oder alle Einström-Fachöffnungen 33 über ihren jeweils gesamten Querschnitt vollständig geöffnet oder verschlossen ist oder sind, wobei die im Querschnitt vollständig durchströmten Einström-Fachöffnungen 33 offen sein sollen, während die nicht oder nur teilweise durchströmbaren Einström-Fachöffnungen 33 vollständig verschlossen oder gesperrt sein sollen.

Die Stauvorrichtung 44 hat bevorzugt eine vertikale Stauwand 44.1, in der der Durchlass 45 mit einem rechteckigen Querschnitt etwa auf Höhe eines Bodens 44.2 der Stauvorrichtung 44 ausgespart ist.

Zur Verdeutlichung der Funktion des Kraftwerks 50 ist in Fig. 10 eine beispielhafte Höhenstellung des Schiebers 46 gezeigt. Der von der Pegelmesseinrichtung 40 gemessene Wasserpegel h in der Stauvorrichtung 44 liegt nur etwa mittig an der Einström-Fachöffnung 33 des Gehäuse-Fachs 26 an. Würde diese Einströmfachöffnung 33 geöffnet sein, würde nur ein Teil ihres Querschnitts durch Wasser durchströmt werden, weshalb auch nur eine reduzierte Kraft zur Anströmung der Drehflächen 5.1, 5.2, 5.3 in der zugeordneten Kammer 5.4 der Rotationsvorrichtung 1 zur Verfügung stehen würde. Die Steuereinrichtung 41 verstellt nun den Schieber 46 derart, dass der Schieber 46 neben dem obersten Fach 25 auch das Gehäuse-Fach 26 vollständig verschließt, wie in Fig. 46 beispielhaft gezeigt ist. Damit fließt das Wasser nur noch durch die Gehäuse-Fächer 27 und 28 bzw. durch die zugeordneten Kammern 3.4 und 4.4 der Rotationsvorrichtung 1, die jedoch von dem Wasser vollständig in Fließrichtung F durchströmt werden, wie auch durch die gestrichelt eingezeichnete Wasserlinie 47 verdeutlicht wird. Durch diese Zwangsführung des Wassers in den Fächern des Gehäuses bzw. den Kammern der Rotationsvorrichtung 1 wird vorteilhafterweise ein erhöhter Wirkungsgrad des Kraftwerks 50 der Erfindung erzeugt.

## Patentansprüche

1. Kombination zum Erzeugen von elektrischer Energie aus der Strömungsbewegung eines Fluids, insbesondere von Wasser,
mit einer Rotationsvorrichtung (1), die aufweist:
eine Hauptdreheinrichtung (2), die mit einer zentralen Drehachse (M) der Rotationsvorrichtung (1) fest verbunden ist, mehrere Drehflächen (3.1, 4.1, 5.1, 6.1, 3.2, 4.2, 5.2, 6.2, 3.3, 4.3, 5.3, 6.3), die von dem Fluid angetrieben werden und drehbar mit Abstand zu der zentralen Drehachse (M) derart an der Hauptdreheinrichtung (2) angebracht sind, dass die Hauptdreheinrichtung (2) durch die Drehflächen eine Drehbewegung um die zentrale Drehachse (M) ausführen kann,
mindestens eine Drehflächengruppe (8.1, 8.2, 8.3) mit mehreren Drehflächen, die entlang einer gemeinsamen Drehflächenachse (9.1, 9.2, 9.3) angeordnet und mit dieser verbunden sind, und mehrere Kammern (3.4, 4.4, 5.4, 6.4), welche entlang und senkrecht zu der zentralen Drehachse (M) vorgesehen und radial bezüglich der zentralen Drehachse (M) offen sind, wobei eine Drehfläche (3.3) einer Drehflächengruppe (8.3) in genau einer Kammer (3.4) angeordnet ist;
**gekennzeichnet durch** ein Gehäuse (20), wobei die Rotationsvorrichtung (1) in dem Gehäuse (20) untergebracht ist und
das Gehäuse (20) aufweist:
eine Einströmöffnung (21) zum Einströmen von Fluid oder Wasser und eine Ausströmöffnung (22) zum Ausströmen des Fluids oder Wassers aus dem Gehäuse (20), wobei die Einströmöffnung (21) der Ausströmöffnung (22) gegenüberliegt,
eine Gehäusewand (23), die sich zwischen der Einströmöffnung (21) und der Ausströmöffnung (22) erstreckt, um zwischen der Einströmöffnung (21) und der Ausströmöffnung (22) einen Gehäuseinnenraum (24) des Gehäuses (20) zu begrenzen, wobei der Gehäuseinnenraum (24) in mehrere Fächer (25, 26, 27, 28) unterteilt ist, die durch Gehäuse-Trennwänden (29, 30, 31) voneinander getrennt sind, welche sich parallel zueinander erstrecken, und von der Einströmöffnung (21) bis zur Ausströmöffnung (22) fluiddurchgängig sind, und wobei die Gehäusewand (23) und deckungsgleiche Durchgangsöffnungen in den Gehäuse-Trennwänden (29, 30, 31) zwischen den Fächern (25, 26, 27, 28) eine Aufnahmekammer (32) zum Aufnehmen der Rotationsvorrichtung (1) in dem Gehäuseinnenraum (24) bereitstellen.

2. Kombination nach Anspruch 1, **dadurch gekennzeichnet, dass** die Rotationsvorrichtung (1) mehrere Drehflächen-Gruppen (8.1, 8.2, 8.3) mit entsprechend vielen Stellrädern (10.1, 10.2, 10.3) hat, wobei jeweils ein Stellrad (10.1, 10.2, 10.3) einer Drehflächengruppe (8.1, 8.2, 8.3) zugeordnet ist, wobei das jeweilige Stellrad (10.1, 10.2, 10.3) mit der zugeordneten Drehflächenachse (9.1, 9.2, 9.3) einer Drehflächengruppe (8.1, 8.2, 8.3) konzentrisch zum Einstellen einer gemeinsamen Winkelposition der Drehflächen pro Drehflächengruppe (8.1, 8.2, 8.3) gegenüber einer Fließrichtung (F) des Fluids oder Wassers gekoppelt ist oder wobei alle Stellräder (10.1, 10.2, 10.3) mit einem zentralen Stellglied (7) zum Einstellen einer Winkelposition der Drehflächen pro Drehflächengruppe (8.1, 8.2, 8.3) gegenüber einer Fließrichtung des Fluids oder Wassers gekoppelt sind.

3. Kombination nach Anspruch 1 oder 2, **dadurch gekennzeichnet, dass** mehrere Drehflächengruppen (8.1, 8.2, 8.3) der Rotationsvorrichtung (1) mit jeweils mehreren Drehflächen (3.1, 4.1, 5.1, 6.1; 3.2, 4.2, 5.2, 6.2, 3.3, 4.3, 5.3, 6.3) vorgesehen sind, wobei die Drehflächen, die gemeinsam in einer Ebene senkrecht zur zentralen Drehachse (M) sind, in einer der Kammern (3.4, 4.4, 5.4, 6.4) angeordnet sind.

4. Kombination nach einem der Ansprüche 1 bis 3, **dadurch gekennzeichnet, dass** die Trennwände (12, 13, 14, 15) der Rotationsvorrichtung (1) fest mit der zentralen Drehachse (M) gekoppelt sind und Durchgangsöffnungen (20) für die Drehflächenachsen (9.1, 9.2, 9.3) entsprechend der Anzahl der Drehflächengruppen haben.

5. Kombination nach einem der Ansprüche 2 bis 4, **dadurch gekennzeichnet, dass** jedes der Fächer (25, 26, 27, 28) des Gehäuses (20) eine Einström-Fachöffnung (34) und eine dazu gegenüberliegende und deckungsgleiche Ausström-Fachöffnung (33) für das Fluid hat, wobei die Einström-Fachöffnungen (34) bündig zu der Einströmöffnung (21) des Fluids und zusammen mit den dazwischen angeordneten Gehäuse-Trennwänden die Einströmöffnung (21) unterteilen und wobei die Ausström-Fachöffnungen (33) bündig zu der Ausströmöffnung (33) sind und zusammen mit den dazwischen angeordneten Gehäuse-Trennwänden die Ausströmöffnung (22) unterteilen.

6. Kraftwerk zum Erzeugen elektrischer Energie mit mindestens einer Stauvorrichtung (44) zum Aufstauen oder Speichern von Wasser aus einem natürlichen oder künstlichen Gewässer oder Fluss, wobei die Stauvorrichtung (44) mindestens einen Durchlass (45) hat, in dem die Strömungsgeschwindigkeit des Wassers erhöht ist, und mit einer Kombination nach einem der Ansprüche 1 bis 5, wobei die Rotationsvorrichtung (1) der Kombination mit einem elektrischen Generator (43) zum Erzeugen von elektrischem Strom gekoppelt ist und in oder an dem Durchlass (45) der Stauvorrichtung (44) angeordnet ist und durch das durch den Durchlass (45) fließende Wasser angetrieben wird.

7. Kraftwerk nach Anspruch 6, **dadurch gekennzeichnet, dass** jeder Kammer (3.4, 4.4, 5.4, 6.4) der Rotationsvorrichtung (1) ein Fach (25, 26, 27, 28) des Gehäuses (20) zugeordnet ist, wobei das Wasser oder Fluid in die Einström-Fachöffnung (34) des jeweiligen Fachs (25, 26, 27, 28) einströmt, die zugeordnete Kammer (3.4, 4.4, 5.4, 6.4) durchströmt und die in der Kammer (3.4, 4.4, 5.4, 6.4) angeordneten Drehflächen (3.1, 4.1, 5.1, 6.1, 3.2, 4.2, 5.2, 6.2, 3.3, 4.3, 5.3, 6.3) antreibt, wieder von der Kammer (3.4, 4.4, 5.4, 6.4) in das jeweilige Fach (25, 26, 27, 28) des Gehäuses fließt und schließlich aus der Ausström-Fachöffnung (33) des Fachs (25, 26, 27, 28) aus dem Gehäuse (20) ausströmt.

8. Kraftwerk nach Anspruch 7, **dadurch gekennzeichnet, dass** das Wasser oder Fluid gleichzeitig nur durch eine Kammer(3.4, 4.4, 5.4, 6.4), eine Teilanzahl der Kammern oder durch alle Kammern der Rotationsvorrichtung (1) fließt.

## Claims

1. Combination to generate electrical energy from the flow movement of a fluid, especially water, with a rotation unit (1), that has:
a main rotation device (2), which is tightly coupled with a central rotation axis (M) of the rotation unit (1), several rotation surfaces (3.1, 4.1, 5.1, 6.1, 3.2, 4.2, 5.2, 6.2, 3.3, 4.3, 5.3, 6.3), which are powered by the fluid and which are rotatably attached at a distance from the central rotation axis (M) to the main rotation device (2) in such a manner that the main rotation device (2) is able to rotate around the central rotation axis (M) due to the rotation surfaces,
at least one rotation surfaces group (8.1, 8.2, 8.3) with several rotation surfaces, which are positioned along a common rotation surfaces axis (9.1, 9.2, 9.3) and which are connected thereto, and several chambers (3.4, 4.4, 5.4, 6.4), which are provided along and vertically to the central rotation axis (M) and which are radially open with respect to the central rotation axis (M), wherein a rotation surface (3.3) of a rotation surfaces group (8.3) is positioned in exactly one chamber (3.4);
**characterised by** a casing (20), wherein the rotation unit (1) is located in the casing (20) and the casing (20) has:
an inlet opening (21) for the inflow of fluid or water and an outlet opening (22) for the outflow of the fluid or water from the casing (20), wherein the inlet opening (21) is opposite to the outlet opening (22),
a casing wall (23), which extends between the inlet opening (21) and the outlet opening (22), in order to delimit an inner casing space (24) inside the casing (20) between the inlet opening (21) and the outlet opening (22), wherein the inner casing space (24) is divided into several compartments (25, 26, 27, 28), separated from one another by casing dividers (29, 30, 31), which extend parallel to one another, and which allow fluid to pass from the inlet opening (21) to the outlet opening (22), and wherein the casing wall (23) and congruent access openings in the casing dividers (29, 30, 31) between the compartments (25, 26, 27, 28) provide a receiving chamber (32) to receive the rotation unit (1) in the inner casing space (24).

2. Combination according to claim 1, **characterised in that** the rotation unit (1) has several rotation surfaces groups (8.1, 8.2, 8.3) with correspondingly many setting wheels (10.1, 10.2, 10.3), wherein a respective setting wheel (10.1, 10.2, 10.3) is assigned to a corresponding rotation surfaces group (8.1, 8.2, 8.3), wherein each setting wheel (10.1, 10.2, 10.3) is coupled concentrically with the assigned rotation surfaces axis (9.1, 9.2, 9.3) of a rotation surfaces group (8.1, 8.2, 8.3) to set a common angle position for the rotation surfaces of each rotation surfaces group (8.1, 8.2, 8.3) with regard to a flow direction (F) of the fluid or water or wherein all setting wheels (10.1, 10.2, 10.3) are coupled with a central actuator (7) to set an angle position for the rotation surfaces of each rotation surfaces group (8.1, 8.2, 8.3) with regard to a flow direction of the fluid or water.

3. Combination according to claim 1 or 2, **characterised in that** several rotation surfaces groups (8.1, 8.2, 8.3) of the rotation unit (1) are each provided with several rotation surfaces (3.1, 4.1, 5.1, 6.1; 3.2, 4.2, 5.2, 6.2, 3.3, 4.3, 5.3, 6.3), wherein the rotation surfaces, which are together in a plane being perpendicular to the central rotation axis (M), are arranged in one of the chambers (3.4, 4.4, 5.4, 6.4).

4. Combination according to one of the claims 1 to 3, **characterised in that** dividing walls (12, 13, 14, 15) of the rotation unit (1) are tightly coupled with the central rotation axis (M) and have as many access openings (20) for the rotation surfaces axes (9.1, 9.2, 9.3) as there are rotation surfaces groups.

5. Combination according to one of the claims 2 to 4, **characterised in that** each of the compartments (25, 26, 27, 28) of the casing (20) has an inlet compartment opening (34) and a congruent opposite outlet compartment opening (33) for the fluid, wherein the inlet compartment openings (34) are flush with the inlet opening (21) of the fluid and, together with the casing dividers located in between, partition the inlet opening (21) and wherein the outlet compartment openings (33) are flush with the outlet opening (22) and, together with the casing dividers located in between, partition the outlet opening (22).

6. Power station to generate electric energy with at least one damming device (44) to dam or store water from a natural or artificial body of water or river, wherein the damming device (44) has at least one passage (45), in which the flow velocity of the water is increased, and with a combination according to one of the claims 1 to 5, wherein the rotation unit (1) of the combination is coupled with an electric generator (43) to generate electricity, the rotation unit (1) is located in or at the passage (45) of the damming device (44), and the rotation unit (1) is driven by the water flowing through the passage (45).

7. Power station according to claim 6, **characterised in that** each chamber (3.4, 4.4, 5.4, 6.4) of the rotation unit (1) is assigned to a compartment (25, 26, 27, 28) of the casing (20), wherein the water or fluid flows into the inlet compartment opening (34) of the corresponding compartment (25, 26, 27, 28), flows through the assigned chamber (3.4, 4.4, 5.4, 6.4) and drives the rotation surfaces (3.1, 4.1, 5.1, 6.1, 3.2, 4.2, 5.2, 6.2, 3.3, 4.3, 5.3, 6.3) located in the chamber (3.4, 4.4, 5.4, 6.4), flows again from the chamber (3.4, 4.4, 5.4, 6.4) into the corresponding compartment (25, 26, 27, 28) of the casing and finally flows through the outlet compartment opening (33) of the compartment (25, 26, 27, 28) out of the casing (20).

8. Power station according to claim 7, **characterised in that** the water or fluid only flows through one chamber (3.4, 4.4, 5.4, 6.4), some of the chambers, or all of the chambers of the rotation unit (1) at the same time.

## Revendications

1. Combinaison pour générer de l'énergie électrique à partir du mouvement d'écoulement d'un fluide, en particulier d'eau, comprenant un dispositif rotatif (1) qui présente : un mécanisme de rotation principal (2) qui est relié à demeure à un axe de rotation central (M) du dispositif rotatif (1) ; plusieurs surfaces de rotation (3.1, 4.1, 5.1, 6.1, 3.2, 4.2, 5.2, 6.2, 3.3, 4.3, 5.3, 6.3) qui sont entraînées par le fluide et qui sont appliquées en rotation à distance de l'axe de rotation central (M) contre le mécanisme de rotation principal (2) d'une manière telle que le mécanisme de rotation principal (2) peut effectuer, via les surfaces de rotation un mouvement de rotation autour de l'axe de rotation central (M) ; au moins un groupe de surfaces de rotation (8.1, 8.2, 8.3) comprenant plusieurs surfaces de rotation qui sont disposées le long d'un axe commun des surfaces de rotation (9.1, 9.2, 9.3) et qui sont reliées à ce dernier ; ainsi que plusieurs chambres (3.4, 4.4, 5.4, 6.4) qui sont prévues le long de l'axe de rotation central et perpendiculairement à ce dernier et qui sont ouvertes en direction radiale par rapport à l'axe de rotation central (M) ; dans laquelle une surface de rotation (3.3) d'un groupe de surfaces de rotation (8.3) est disposée dans précisément une chambre (3.4) ; **caractérisée par** un logement (20), le dispositif rotatif (1) étant monté dans le logement (20) et le logement (20) présentant : une ouverture d'entrée (21) pour l'alimentation de fluide ou d'eau et une ouverture de sortie (22) pour l'évacuation du fluide ou de l'eau hors du logement (20), l'ouverture d'entrée (21) étant opposée à l'ouverture de sortie (22) ; une paroi de logement (23) qui s'étend entre l'ouverture d'entrée (21) et l'ouverture de sortie (22), destinée à limiter un espace interne (24) du logement (20) entre l'ouverture d'entrée (21) et l'ouverture de sortie (22) ;dans laquelle l'espace interne (24) du logement est subdivisé en plusieurs compartiments (25, 26, 27, 28) qui sont séparés les uns des autres par des parois de séparation de logement (29, 30, 31), qui s'étendent parallèlement les unes aux autres, et qui peuvent être traversées par le fluide depuis l'ouverture d'entrée (21) jusqu'à l'ouverture de sortie (22) ; et dans laquelle la paroi de logement (23) et des ouvertures de passage coïncidentes dans les parois de séparation de logement (29, 30, 31) procurent, entre les compartiments (25, 26, 27, 28), une chambre de réception (32) pour la réception du dispositif rotatif (1) dans l'espace interne de logement (24).

2. Combinaison selon la revendication 1, **caractérisée en ce que** le dispositif rotatif (1) possède plusieurs groupes de surfaces de rotation (8.1, 8.2, 8.3) comprenant un grand nombre correspondant de roues de réglage (10.1, 10.2 10.3) ; dans laquelle respectivement une roue de réglage (10.1, 10.2 10.3) est attribuée à un groupe de surfaces de rotation (8.1, 8.2, 8.3) ; dans laquelle la roue de réglage respective (10.1, 10.2 10.3) est couplée à l'axe de surface de rotation correspondant (9.1, 9.2, 9.3) d'un groupe de surfaces de rotation (8.1, 8.2, 8.3) en position concentrique pour le réglage d'une position angulaire commune des surfaces de rotation par groupe de surfaces de rotation (8.1, 8.2, 8.3) par rapport à une direction d'écoulement (F) du fluide ou de l'eau ; ou dans laquelle toutes les roues de réglage (10.1, 10.2 10.3) sont couplées à un organe de réglage central (7) pour le réglage d'une position angulaire des surfaces de rotation par groupe de surfaces de rotation (8.1, 8.2, 8.3) par rapport à une direction d'écoulement du fluide ou de l'eau.

3. Combinaison selon la revendication 1 ou 2, **caractérisée en ce qu'**on prévoit plusieurs groupes de surfaces de rotation (8.1, 8.2, 8.3) du dispositif rotatif (1) comprenant respectivement plusieurs surfaces de rotation (3.1, 4.1, 5.1, 6.1, 3.2, 4.2, 5.2, 6.2, 3.3, 4.3, 5.3, 6.3) ; dans laquelle les surfaces de rotation, qui sont disposées de manière conjointe dans un plan perpendiculairement à l'axe de rotation central (M), sont disposées dans une des chambres (3.4, 4.4, 5.4, 6.4).

4. Combinaison selon l'une quelconque des revendications 1 à 3, **caractérisée en ce que** les parois de séparation (12, 13, 14, 15) du dispositif rotatif (1) sont couplées à demeure avec l'axe de rotation central (M) et des ouvertures de passage (20) pour les axes des surfaces de rotation (9.1, 9.2, 9.3) possèdent de manière correspondante le nombre des groupes de surfaces de rotation.

5. Combinaison selon l'une quelconque des revendications 2 à 4, **caractérisée en ce que** chacun des compartiments (25, 26, 27, 28) du logement (20) possède une ouverture de compartiment d'alimentation (34) et une ouverture de compartiment d'évacuation (33) coïncidente et opposée à la première citée pour le fluide ; dans laquelle les ouvertures de compartiment d'alimentation (34), à fleur par rapport à l'ouverture d'entrée (21) du fluide et de manière conjointe avec les parois de séparation de logement disposées entre, subdivisent l'ouverture d'entrée (21) ; et dans laquelle les ouvertures de compartiment d'évacuation (33), à fleur par rapport à l'ouverture de sortie (33) du fluide et de manière conjointe avec les parois de séparation de logement disposées entre, subdivisent l'ouverture de sortie (22).

6. Centrale électrique pour générer de l'énergie électrique, comprenant au moins un dispositif d'accumulation (44) pour l'accumulation ou le stockage d'eau à partir d'un milieu aquatique naturel ou artificiel ou d'un fleuve ; dans laquelle le dispositif d'accumulation (44) possède au moins un passage (45) dans lequel la vitesse d'écoulement de l'eau est augmentée, et comprenant une combinaison selon l'une quelconque des revendications 1 à 5 ; dans laquelle le dispositif rotatif (1) de la combinaison est couplé à un générateur électrique (43) destiné à générer du courant électrique et est disposé dans ou contre le passage (45) du dispositif d'accumulation (44) et est entraîné par l'eau qui s'écoule à travers le passage (45).

7. Centrale électrique selon la revendication 6, **caractérisée en ce que** à chaque chambre (3.4, 4.4, 5.4, 6.4) du dispositif rotatif (1) est attribué un compartiment (25, 26, 27, 28) du logement (20) ; dans laquelle l'eau ou le fluide s'écoule dans l'ouverture de compartiment d'entrée (34) du compartiment respectif (25, 26, 27, 28), traverse la chambre correspondante (3.4, 4.4, 5.4, 6.4) et entraîne les surfaces de rotation (3.1, 4.1, 5.1, 6.1, 3.2, 4.2, 5.2, 6.2, 3.3, 4.3, 5.3, 6.3) disposées dans la chambre (3.4, 4.4, 5.4, 6.4), ressort de la chambre (3.4, 4.4, 5.4, 6.4) en s'écoulant dans le compartiment respectif (25, 26, 27, 28) du logement et enfin s'évacue par l'ouverture de compartiment de sortie (33) du compartiment (25, 26, 27, 28), hors du logement (20).

8. Centrale électrique selon la revendication 7, **caractérisée en ce que** l'eau ou le fluide s'écoule de manière simultanée uniquement à travers une chambre (3.4, 4.4, 5.4, 6.4), à travers une quantité partielle des chambres ou à travers la totalité des chambres du dispositif rotatif (1).
